# EUROPÄISCHE PATENTSCHRIFT

(11) **EP 1 334 749 B1**
(45) Veröffentlichungstag und Bekanntmachung des Hinweises auf die Patenterteilung: **01.08.2007**
(21) Anmeldenummer: 03000513.6
(22) Anmeldetag: 09.01.2003
(51) Int. Cl.: A62C 39/00, G09B 9/00

(54) **Vorrichtung zur Brandsimulation**
Apparatus to simulate a fire
Dispositif de simulation d'un feu

(30) Priorität: 06.02.2002 DE 10204835
(43) Veröffentlichungstag der Anmeldung: 13.08.2003
(73) Patentinhaber: I.F.I. Institut für Industrieaerodynamik GmbH, 52074 Aachen (DE)
(72) Erfinder: Gerhardt, H. J., Prof. Dr.-Ing., 52072 Aachen (DE); Schönwald, Jürgen, Dipl.-Ing., 52249 Eschweiler (DE); Konrath, Bernd, Dipl.-Ing., 52074 Aachen (DE)
(74) Vertreter: Schwabe - Sandmair - Marx

(56) Entgegenhaltungen:
- WO-A-01/64293
- US-A- 5 374 191
- US-A- 5 447 437

## Beschreibung

Die Erfindung betrifft eine Vorrichtung zur realitätsnahen Simulation der Rauchströmung bei Gebäudebränden. Brandrauch ist bei Gebäudebränden die Hauptursache für Personenschäden und Todesfälle. Einer gesicherten Rauchableitung kommt daher bei der Planung von Brandschutzkonzepten eine zentrale Bedeutung zu. Die Auslegung von Maßnahmen zur Rauchableitung erfolgt üblicherweise mittels physikalischer oder mathematischer Modelle. Für die der Auslegung zugrunde liegenden Bemessungsbrände kann man typischerweise von maximalen Wärmefreisetzungen Q = 1 bis 8 MW und von Brandflächen A_{Br} = 2 m² bis 12 m² ausgehen. Bei realen Bränden vergrößert sich dabei sowohl die Wärmefreisetzung als auch die Brandfläche mit der Zeit.

In zunehmendem Maße fordern die Genehmigungsbehörden nach Errichtung des Bauwerkes, insbesondere bei Sonderbauwerken, sogenannte Realversuche zur Überprüfüng des Entrauchungskonzeptes. Zur Zeit wird dabei das Brandgeschehen entweder durch erwärmte Luft oder durch Flüssigkeitsbrände simuliert. Zur Sichtbarmachung wird der erwärmten Luft bzw. den über den Flüssigkeitsbränden aufsteigenden Brandgasen Nebelfluid beigemischt. In beiden Fällen ist die Wärmefreisetzung und die simulierte Brandfläche während des Versuches konstant. Während man mit Flüssigkeitsbränden Wärmefreisetzungen, wie sie zu späteren Zeitpunkten von sich entwickelnden Bränden zu erwarten sind, nachstellen kann, sind die Wärmefreisetzungen bei Erwärmung der Luft erheblich kleiner als bei realen Bränden. Die Größe der Brandfläche beeinflusst wesentlich den abzuleitenden Rauchgasvolumenstrom. Dieser wird bei größeren realen Bränden durch die beschriebenen Simulationsmethoden deutlich unterschätzt. Beide Simulationsmethoden geben also weder die für das Aufsteigen der Brandgase über dem Brandherd charakteristische zeitliche Abhängigkeit der Wärmefreisetzung noch den abzuleitenden Rauchgasvolumenstrom realistisch wieder.

Eine Brandsimulationsvorrichtung gemäß dem Oberbegriff des Anspruchs 1 ist aus der WO 01/64292 A1 bekannt.

Der Erfindung liegt die Aufgabe zugrunde, eine Vorrichtung zur Simulation von Brandgeschehen zu schaffen, welche die Nachteile der bisher bekannten Verfahren vermeidet. Neben der mangelhaften Wärmefreisetzung/Zeit-Simulation ist dies bei Flüssigkeitsbränden auch die Schwierigkeit in der Handhabung brennbarer Flüssigkeiten. Diese lassen sich insbesondere nicht nach Belieben abschalten.

Die Aufgabe wird erfindungsgemäß durch die im kennzeichnenden Teil des Anspruch 1 angegebenen Merkmale gelöst.

Zweckmäßige Ausführungsformen werden durch die Merkmale der Unteransprüche definiert.

Die mit der Erfindung erzielten Vorteile bestehen darin, dass die für die Rauchausbreitung im Brandfall entscheidende thermikbedingte Strömung realitätsnah simuliert werden kann. Diese Auftriebsströmung, im Brandschutzschrifttum als Plume-Strömung bezeichnet, ergibt sich durch die Wärmefreisetzung des Brandes. Diese Wärmefreisetzung wird durch gasbetriebene Brenner hervorgerufen. Durch Regelung des Brenngasvolumenstromes kann die Wärmefreisetzung nahezu beliebig eingestellt werden. Ferner wird die Brandausbreitung durch das Hinzuschalten weiterer Brenner realitätsnah simuliert. Zur Verstärkung des Auftriebseffektes kann der aufsteigenden, erwärmten Luft ein leichtes Gas, z. B. Helium, beigefügt werden. Zur Sichtbarmachung der Warmluftströmung kann dieser ein Nebelfluid eingesprüht oder beigemischt werden.

Die Erfindung wird im Folgenden anhand eines Ausführungsbeispiels unter Bezugnahme auf die beiliegenden, schematischen Zeichnungen näher erläutert.
- Figur 1: zeigt einen Vertikalschnitt durch eine typische Anordnung,
- Figur 2: eine Aufsicht auf ein Brennerfeld und
- Figur 3: die Wärmefreisetzung in Abhängigkeit von der Zeit.

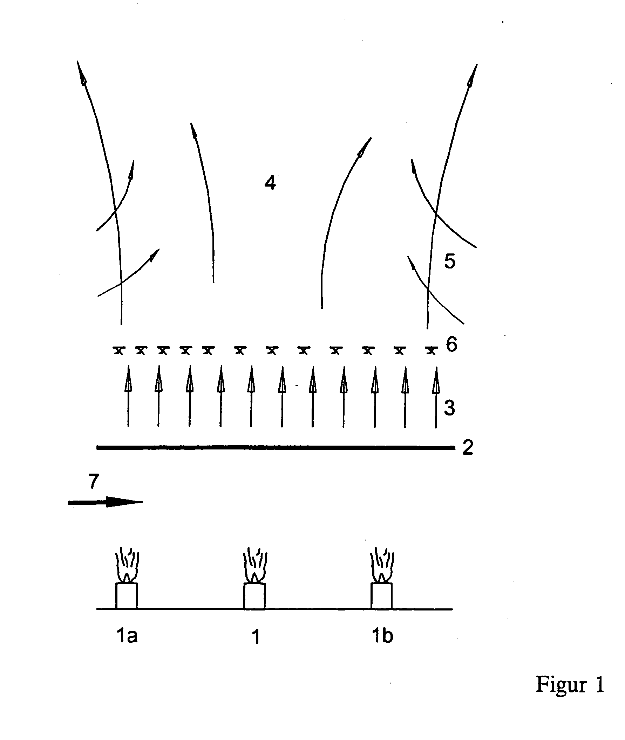

Wie in Figur 1 dargestellt, können die Brenner 1, 1a, 1b auf den Boden des Brandraumes oder gegebenenfalls erhöht auf diesen gestellt werden. Zur Vermeidung einer direkten Flammenbeaufschlagung angrenzender Raumbereiche und zur Vergleichmäßigung der Auftriebsströmung kann oberhalb der Brenner eine durchlässige Prallfläche 2 angeordnet werden. Von dieser strömt das Heißgas 3, das das Rauchgas oberhalb eines Brandes simuliert, gleichmäßig nach oben und bildet im weiteren Verlauf den sogenannten Plume 4. Den Brennern kann die Verbrennungsluft 7 seitlich ungehindert zuströmen. Dem Plume 4, der in strömungstechnischer Hinsicht einem Freistrahl entspricht, strömt dabei seitlich Raumluft 5 zu. Zur Sichtbarmachung kann dem Heißgasstrom 3 und/oder dem Plume 4 ein geeignetes Fluid, z. B. über Sprühdüsen 6, zugeführt werden. Zur Verbesserung der Auftriebsströmung kann dem nach oben strömenden Brenngas/Luft-Gemisch über die Rohrleitung 8 und den in dieser befindlichen Öffnungen 9 ein leichtes Gas, z. B. Helium, beigemischt werden.

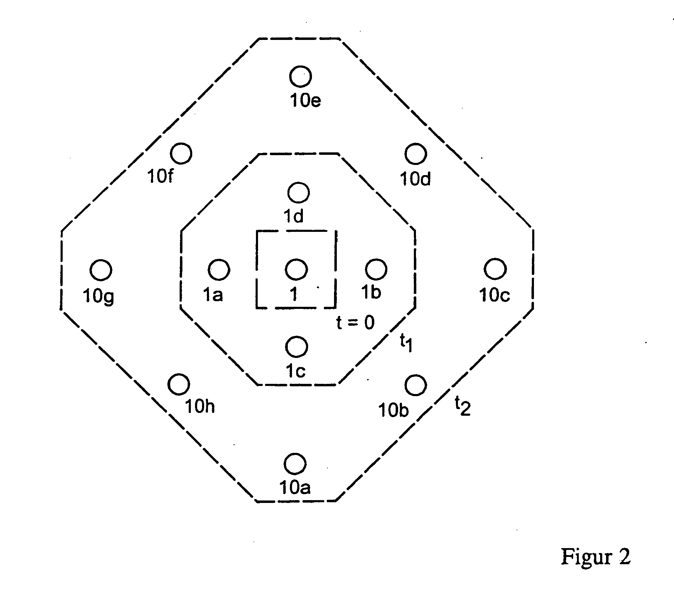

Die Anordnung der Brenner in der Aufsicht, siehe Figur 2, stellt eine Möglichkeit dar, einen sich entwickelnden Brand zu simulieren. Zu Beginn des simulierten Brandes, t = 0, ist nur ein Brenner 1 aktiviert. Zu einem späteren Zeitpunkt, t=t₁, werden die vier Brenner 1a, 1b, 1c und 1d zugeschaltet. Zu einem noch späteren Zeitpunkt, t = t₂, werden zusätzlich die nächsten acht Brenner 10a bis 10h aktiviert.

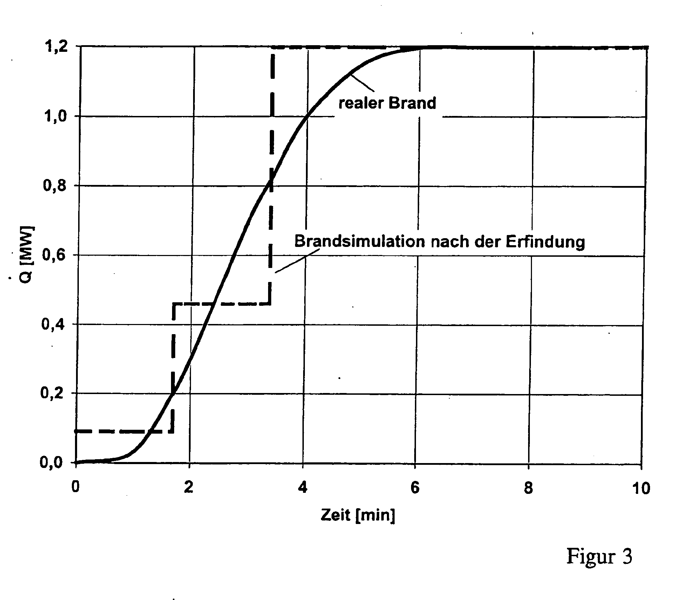

Der Vorteil der neuen Vorrichtung geht aus Figur 3 hervor. Aufgetragen ist ein beispielhafter Verlauf der Wärmefreisetzung Q, angegeben in Megawatt (MW) in Abhängigkeit von der Zeit, angegeben in Minuten. Werden die Gasbrenner lediglich an- bzw. abgeschaltet, so ergibt die Steuerung entsprechend der Anordnung in Figur 2 die in Figur 3 dargestellte Stufenfunktion. Werden zusätzlich die Gaszufuhren zu den einzelnen Brennern über einen Durchflussregler geregelt, so kann die in Figur 3 dargestellte Wärmefreisetzungskurve des realen Brandes exakt oder nahezu exakt simuliert werden.

## Patentansprüche

1. Brandsimulationsvorrichtung, bei welcher die Wärmefreisetzung eines Brandgeschehens durch einen oder mehrere ansteuerbare und/oder regelbare Gasbrenner (1, 10) erzeugt wird, **dadurch gekennzeichnet, dass** zur Vergleichmäßigung der Auftriebsströmung oberhalb des Brennerfeldes eine durchlässige Prallfläche (2) angebracht ist.

2. Brandsimulationsvorrichtung nach Anspruch 1, **dadurch gekennzeichnet, dass** flüssiggasbetriebene Gasbrenner verwendet werden.

3. Brandsimulationsvorrichtung nach Anspruch 1, **dadurch gekennzeichnet, dass** die Gasbrenner mit gasförmigem Brennstoffbetrieben werden.

4. Brandsimulationsvorrichtung nach Anspruch 1, **dadurch gekennzeichnet, dass** die durchlässige Prallfläche (2) eine relative Durchlässigkeit ε =10 % bis 70 %, bevorzugt ε ≈ 30 % aufweist.

5. Brandsimulationsvorrichtung nach Anspruch 2, **dadurch gekennzeichnet, dass** die Prallfläche (2) im Bereich der Flammenspitzen der Gasbrenner (1, 10) angeordnet ist.

6. Brandsimulationsvorrichtung nach Anspruch 2, **dadurch gekennzeichnet, dass** das Nebelfluid dem Plume (4) oberhalb der Prallfläche(2) durch Sprühdüsen (6) zugeführt wird.

7. Brandsimulationsvorrichtung nach Anspruch 2, **dadurch gekennzeichnet, dass** dem Plume (4) unterhalb oder oberhalb der Prallfläche (2) das Nebelfluid über einen separaten Nebelgenerator zugeführt wird.

8. Brandsimulationsvorrichtung nach Anspruch.1, **dadurch gekennzeichnet, dass** zur Vergrößerung der Auftriebswirkung dem Heißgas (3) und/oder dem Plume (4) über die Rohrleitung (8) und den in dieser befindlichen Öffnungen (9) ein leichtes Gas, vorzugsweise Helium, beigemischt wird.

## Claims

1. A fire simulating apparatus, in which the release of heat from the occurrence of a fire is generated by one or more gas burners (1, 10) which can be controlled and/or regulated, **characterised in that** a permeable impact area (2) is disposed above the panel of burners in order to homogenise the lifting flow.

2. The fire simulating apparatus according to claim 1, **characterised in that** liquid gas-powered gas burners are used.

3. The fire simulating apparatus according to claim 1, **characterised in that** the gas burners are powered using gaseous fuel.

4. The fire simulating apparatus according to claim 1, **characterised in that** the permeable impact area (2) exhibits a relative permeability ε = 10% to 70%, preferably ε ≈ 30%.

5. The fire simulating apparatus according to claim 2, **characterised in that** the impact area (2) is arranged in the region of the tips of the flames of the gas burners (1, 10).

6. The fire simulating apparatus according to claim 2, **characterised in that** the mist fluid is fed to the plume (4) above the impact area (2) by spray nozzles (6).

7. The fire simulating apparatus according to claim 2, **characterised in that** the mist fluid is fed to the plume (4) above or below the impact area (2) via a separate mist generator.

8. The fire simulating apparatus according to claim 1, **characterised in that** a light gas, preferably helium, is added to the heated gas (3) and/or plume (4), via the pipe conduit (8) and the openings (9) located in it, in order to increase the lifting effect.

## Revendications

1. Dispositif de simulation d'incendie dans lequel le dégagement de chaleur d'un incendie est produit par un ou plusieurs brûleurs à gaz (1, 10) qui peuvent être commandés et/ou régulés, **caractérisé en ce qu'**une surface d'impact (2) perméable est placée au-dessus des brûleurs à gaz pour uniformiser le courant ascensionnel.

2. Dispositif de simulation d'incendie selon la revendication 1, **caractérisé en ce qu'**on utilise des brûleurs à gaz fonctionnant avec un gaz liquide.

3. Dispositif de simulation d'incendie selon la revendication 1, **caractérisé en ce que** les brûleurs à gaz fonctionnent avec un combustible gazeux.

4. Dispositif de simulation d'incendie selon la revendication 1, **caractérisé en ce que** la surface d'impact (2) perméable présente une perméabilité relative ε = 10 % à 70 %, de préférence ε ≅ 30 %.

5. Dispositif de simulation d'incendie selon la revendication 2, **caractérisé en ce que** la surface d'impact (2) est disposée dans la zone des pointes des flammes des brûleurs à gaz (1, 10).

6. Dispositif de simulation d'incendie selon la revendication 2, **caractérisé en ce que** le fluide nébulisé est amené par des buses de pulvérisation (6) aux émanations (4) au-dessus de la surface d'impact (2).

7. Dispositif de simulation d'incendie selon la revendication 2, **caractérisé en ce que** le fluide nébulisé est amené aux émanations (4) par un générateur de brouillard séparé, au-dessous ou au-dessus de la surface d'impact (2).

8. Dispositif de simulation d'incendie selon la revendication 1, **caractérisé en ce que** pour accroître l'effet de sustentation, un gaz léger, de préférence de l'hélium est mélangé au gaz chaud (3) et/ou aux émanations (4), à travers la tuyauterie (8) et les orifices (9) se trouvant dans celle-ci.
